# EUROPEAN PATENT APPLICATION

(11) **EP 2 578 483 A1**
(43) Date of publication of application: **10.04.2013**
(21) Application number: 11183987.4
(22) Date of filing: 05.10.2011
(51) Int. Cl.: B62K 5/02

(54) **Tricycle**

(71) Applicant: Misiarz, Stanislaw, 43-100 Tychy (PL)
(72) Inventor: Misiarz, Stanislaw, 43-100 Tychy (PL)
(74) Representative: Malcherek, Piotr

(57) **Abstract**

A tricycle ( 1 ) according to the invention comprises one front wheel ( 3 ) and two rear wheels ( 6 ). Power is transmitted from a crankset ( 4 ) via a chain onto both rear wheels ( 6 ) seated on the ends of the rear axle assembly ( 7 ). The rear axle assembly ( 7 ) comprises a differential ( 9 ) including a toothed wheel ( 10 ) for receiving power from the crankset ( 5 ) and transmitting said power via the differential ( 9 ) onto both rear wheels ( 6 ), wherein the ends of the two half shafts ( 11 ) protruding from the differential ( 9 ) connected by Cardan joints ( 12 ) with axles ( 13 ) of seats ( 14 ) of the rear wheels ( 6 ) are oriented at an angle ( α ) ranging from 4° to 12° in relation to the longitudinal axis of the half shafts ( 11 ) of the differential ( 9 ), and the rear wheels ( 6 ) are convergent upwards.

## Description

The subject of the invention is a tricycle comprising one front wheel and two rear wheels, in which power is transmitted from a crankset via a chain onto both rear wheels seated on the ends of the rear axle assembly.

There are various structures of tricycles comprising one front wheel and two powered rear wheels parallel to each other on the ends of a shared rear axle assembly. The power is transmitted from a crankset via a string link, for example a chain, onto a toothed wheel of the rear axle assembly. In some embodiments the power is transmitted with the use of an intermediate axle comprising, depending on the particular purpose of the tricycle, a gear transmission and/or a torpedo mechanism and/or a freewheel.

The invention relates to a tricycle comprising one front wheel and two rear wheels in which power is transmitted from a crankset via a chain onto both rear wheels seated on the ends of the rear axle assembly. The tricycle according to the invention is **characterised in that** the rear axle assembly comprises a differential including a toothed wheel to receive the power from the crankset and transmitting said power onto both rear wheels via the differential, wherein the ends of the two half shafts protruding from the differential are connected by Cardan joints with the axles of the seats of the rear wheels in such a way that the axles of the seats are oriented at an angle ranging from 4° to 12° in relation to the longitudinal axis of the differential half shaft, and the rear wheels are mutually convergent upwards.

Preferably the inclination angle of the axles of the seats of the rear wheels in relation to the longitudinal axes of the differential half shaft is within the range of 5° to 10°, most preferably 8°.

It is also preferable when the rear axle assembly comprises two reinforcement brackets on each side of the differential, and each of said brackets comprises a hollow sleeve which has a seated bearing stabilizing the position of the differential half shaft.

In another preferred embodiment the rear axle assembly comprises two housings, each of which houses a connection of the end of the Cardan joint with the corresponding axle of seat of the rear wheel.

It is also recommendable that the housings comprise further brackets for joining the rear axle assembly with the tricycle frame.

It is also advisable that the housings are connected by at least one, preferably three bows.

In such an embodiment it is preferable when the bows are additionally connected with the reinforcement brackets.

The tricycle according to the invention owing to the differential located in the rear axle assembly transmitting the power onto the two rear wheels and the application of the Cardan joints for connecting the differential half shafts with the axles of the seats of the rear wheels convergent upwards enables driving the inclining rear wheels, owing to which a highly stable position of the tricycle is ensured, especially while riding on uneven terrain and on bends. It is particularly important, especially in tricycles used as rehabilitation tricycles or utility tricycles for disabled persons. In particular the inclination of the powered rear wheels stabilises the tricycle and prevents the possibility of tipping over while riding on bends or on uneven surfaces. What is more, the application of the reinforcement brackets with the sleeves and of housings for connections of the end of the Cardan joint with the corresponding axle of the seat of the rear wheel stabilises the work of the rear axle assembly, including the Cardan joint, and reinforces and tensions the structure and enables mounting the rear axle assembly to the tricycle frame. Additional reinforcement of the structure is obtained thanks to the application of the bows.

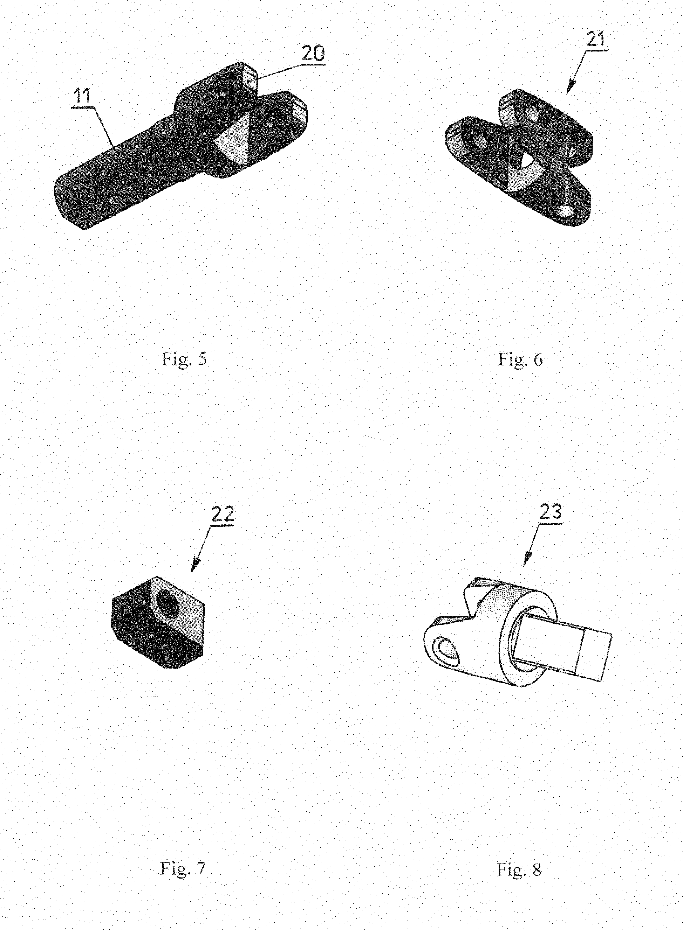

The invention is presented in greater detail in the following embodiment and in the enclosed drawing, where fig.1 shows a schematic perspective view of the tricycle, fig. 2 - a schematic rear view of the tricycle, fig. 3 - a perspective view of the rear axle assembly, fig. 4 - a front view of the rear axle assembly, and fig. 5 to fig. 8 - a perspective view of the selected elements of the Cardan joint system connecting the ends of the differential half shafts with the ends of the axles of the seats of the rear wheels of the tricycle.

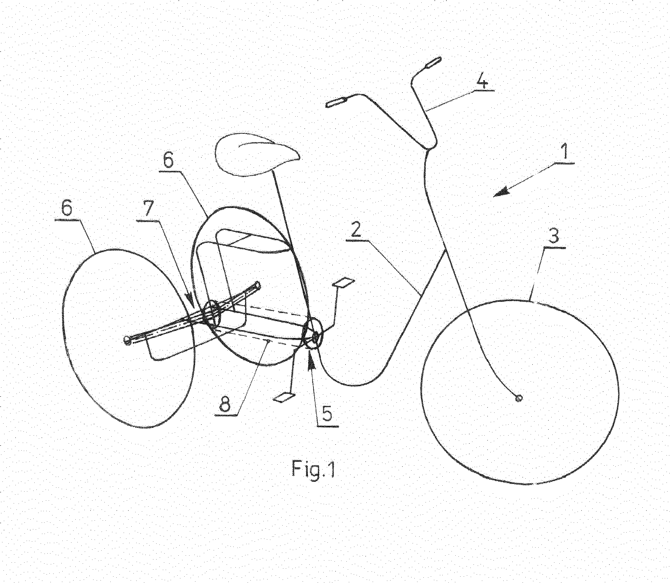

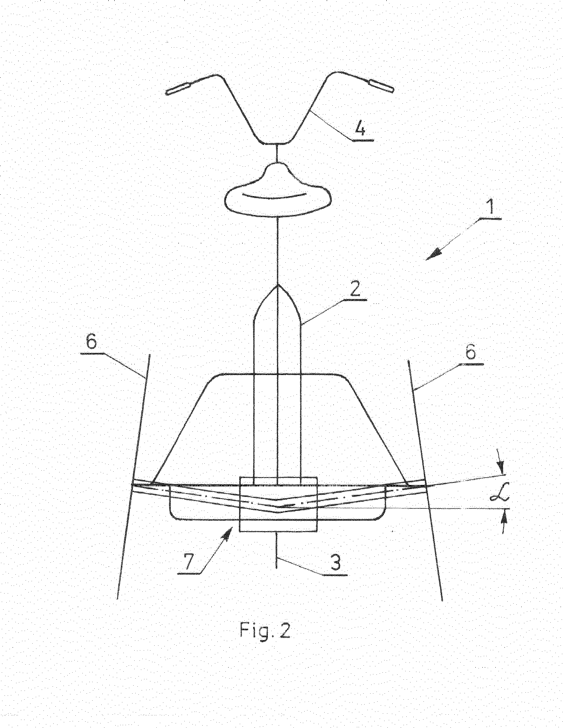

A tricycle 1 ( fig. 1, fig. 2 ) comprises a frame 2, a front wheel 3, a handlebar 4, a crankset 5 and two rear wheels 6. Power is transmitted from the crankset 5 via a chain 8 onto a rear axle assembly 7, on whose ends the rear wheels 6 are mounted. The tricycle also comprises a saddle or a seat in case of a tricycle for rehabilitation purposes.

The invention also encompasses embodiments in which power is transmitted by means of the intermediate axle assembly comprising, depending on the particular purpose of the tricycle, a transmission and/or a torpedo mechanism and/or a freewheel.

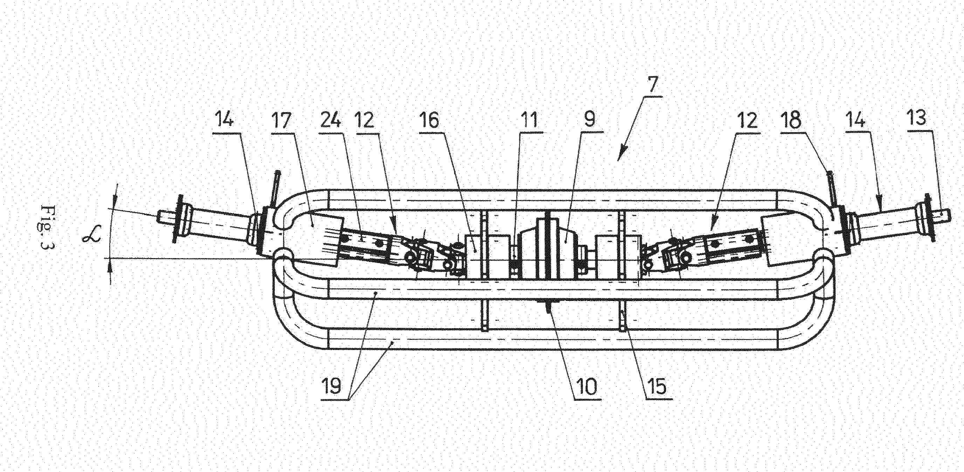

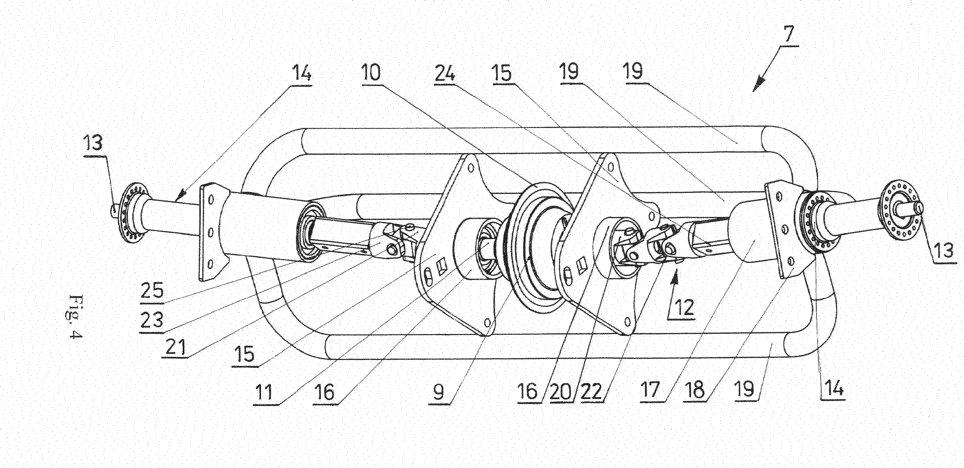

The rear axle assembly 7 ( fig. 3, fig. 4 ) comprises a differential 9 including a schematically shown toothed wheel 10 for receiving the power from the crankset 5 and transmitting said power via the differential 9 onto both rear wheels 6. The ends of the two half shafts 11 coming out from the differential 9 are connected by the Cardan joints 12 with the axles 13 of the seats 14 of the rear wheels 6 in such a way that the axles 13 of the seats 14 of the rear wheels 6 are oriented at an α angle ranging between 4° and 12° in relation to the longitudinal axis of the half shafts 11 of the differential 9. The rear wheels 6 are therefore mutually convergent upwards.

In different embodiments the α inclination angle of the axles 13 of the seats 14 of the rear wheels 6 in relation to the longitudinal axes of the half shafts 11 of the differential 9 is within the range of 5° to 10°, most preferably 8°, which results in mutually convergent inclination of both rear wheels 6.

Moreover, the rear axle assembly 7 comprises two reinforcement brackets 15 located on each side of the differential 9, and each bracket 15 comprises a hollow sleeve 16 with a bearing seated inside said sleeve 16, which bearing stabilises the position of the half shafts 11 of the differential 9.

The rear axle assembly 7 also comprises two housings 17, each of which houses a connection of the end of the Cardan joint 12 with a corresponding axle 13 of the seat 14 of the rear wheel 6. The housings 17 stabilise the position of the elements of the Cardan joint 12 and/or the axle 13 of the seat 14 of the rear wheel 6 with the use of bearings.

The housings 17 comprise further brackets 18 for joining the rear axle assembly 7 to the frame 2 of the tricycle 1.

Furthermore, the housings 17 are connected with at least one bow 19, wherein in the embodiment shown in the drawing of the housing 17 said housings 17 are connected by three bows 19. The bows 19 may additionally be connected with reinforcement brackets 15.

Each of the half shafts 11 of the differential 9 has a cross-piece with beveled edges 20, by means of which it is connected with subsequent elements of the Cardan joint 12 corresponding with said half shaft 11. The Cardan joint 12 comprises, for example, a double-sided cross-piece 21, square couplers 22, a cross-piece with a shaped connecting link 23, in particular with a tetragonal connecting link, and a shaped sleeve 24, in particular tetragonal for connecting the Cardan joint 12 with the axle 13 of the seat 14 of the rear wheel 6. Furthermore, the Cardan joint 12 includes washers and pins 25 for connecting the individual elements thereof.

## Claims

1. A tricycle comprising one front wheel and two rear wheels, in which power is transmitted from a crankset via a chain onto both rear wheels seated on the ends of a rear axle assembly, **characterised in that** the rear axle assembly ( 7 ) comprises a differential ( 9 ) including a toothed wheel (10 ) for receiving power from the crankset ( 5 ) and transmitting said power via the differential ( 9 ) onto both rear wheels ( 6 ), wherein the ends of two half shafts ( 11 ) protruding from the differential ( 9 ) are connected by Cardan joints ( 12 ) with axles ( 13 ) of seats ( 14 ) of the rear wheels ( 6 ) so that the axles ( 13 ) of the seats ( 14 ) of the rear wheels ( 6 ) are oriented at an angle ( α ) ranging from 4° to 12° in relation to the longitudinal axis of the half shafts ( 11 ) of the differential ( 9 ), and the rear wheels ( 6 ) are convergent upwards.

2. The tricycle according to claim 1, **characterised in that** the inclination angle ( α ) of the axles ( 13 ) of the seats ( 14 ) of the rear wheels ( 6 ) in relation to the longitudinal axes of the half shafts ( 11 ) of the differential ( 9 ) is within the range of 5° to 10°, most preferably 8°.

3. The tricycle according to claim 1 or 2, **characterised in that** the rear axle assembly ( 7 ) comprises two reinforcement brackets ( 15 ) on each side of the differential ( 9 ), and each reinforcement bracket ( 15 ) comprises a hollow sleeve ( 16 ) stabilising the position of the half shafts ( 11 ) of the differential ( 9 ).

4. The tricycle according to one of the claims 1 - 3, **characterised in that** the rear axle assembly ( 7 ) comprises two housings ( 17 ), each of which houses a connection of the end of the Cardan joint ( 12 ) with a corresponding axle ( 13 ) of the seat ( 4 ) of the rear wheel ( 6 ).

5. The tricycle according to claim 4, **characterised in that** the housings ( 17 ) comprise further brackets ( 18 ) for connecting the rear axle assembly ( 7 ) with the frame ( 2 ) of the tricycle ( 1 ).

6. The tricycle according to claim 4, **characterised in that** the housings ( 17 ) are connected by at least one and preferably three bows ( 19 ).

7. The tricycle according to claim 6, **characterised in that** the bows ( 19 ) are additionally connected with the reinforcement brackets ( 15 ).
